# EUROPÄISCHE PATENTSCHRIFT

(11) **EP 0 596 958 B1**
(45) Veröffentlichungstag und Bekanntmachung des Hinweises auf die Patenterteilung: **23.08.1995**
(21) Anmeldenummer: 92916271.7
(22) Anmeldetag: 21.07.1992
(51) Int. Cl.: C09J 9/00, C09J 103/08

(54) **KLEBESTIFT AUF STÄRKEETHERBASIS**
ADHESIVE STICK MADE FROM STARCH ETHERS
BATON DE COLLE A BASE D'ETHER D'AMIDON

(30) Priorität: 30.07.1991 DE 4125122
(43) Veröffentlichungstag der Anmeldung: 18.05.1994
(73) Patentinhaber: Henkel Kommanditgesellschaft auf Aktien, 40191 Düsseldorf (DE)
(72) Erfinder: GARDENIER, Karl-Josef, D-4000 Düsseldorf 13 (DE); GIERENZ, Gerhard, D-5650 Solingen (DE); KLAUCK, Wolfgang, D-4005 Meerbusch 2 (DE); PETERS, Bernd, D-5650 Solingen (DE); DONOTHEK, Horst, D-4019 Monheim 2 (DE); DÖRING, Norbert, D-4040 Neuss 1 (DE)
(86) Internationale Anmeldenummer: EP9201665
(87) Internationale Veröffentlichungsnummer: WO9303109

(56) Entgegenhaltungen:
- DE-A- 1 811 466
- FR-A- 2 338 980
- GB-A- 1 207 387
- DATABASE WPIL Week 9229, Derwent Publications Ltd., London, GB; AN 92-238610

## Beschreibung

Die Erfindung betrifft einen Klebestift, bestehend aus einer wäßrigen Zubereitung von Stärkederivaten und einem Seifengel als formgebender Gerüstsubstanz sowie gewünschtenfalls weiteren Hilfsstoffen. Des weiteren betrifft die Erfindung ein Verfahren zur Herstellung solcher Stifte sowie deren Verwendung.

Klebestifte (= stäbchenförmige Klebstoffe, die in einer verschließbaren Hülle verschiebbar gelagert sind und beim Abreiben auf eine Empfängerfläche einen klebrigen Film hinterlassen) sind heute Gebrauchsgegenstände des täglichen Lebens. Sie enthalten insbesondere (siehe hierzu DE-PS 18 11 466) wasserlösliche bzw. wasserdispergierbare synthetische Hochpolymere mit Klebstoffcharakter - insbesondere Polyvinylpyrrolidon (PVP) - gelöst in einer wäßrig-organischen Flüssigphase zusammen mit einer formgebenden Gerüstsubstanz. Als Gerüstsubstanz werden insbesondere Alkali- bzw. Ammoniumsalze aliphatischer Carbonsäuren, insbesondere des C-Zahlbereichs von etwa 12 bis 22, verwendet. Werden die an sich hochklebrigen wäßrigen Aufbereitungen der Polymersubstanzen mit Klebstoffcharakter zusammen mit geringen Mengen der Gerüstsubstanz auf Basis von Fettsäureseifen auf höhere Temperaturen, insbesondere oberhalb 50 °C, erwärmt und läßt man dann diese Lösung in Ruhestellung abkühlen, so erstarrt das Stoffgemisch zu einem mehr oder weniger steifen Seifengel, in dem die formgebende und vergleichsweise starre Micellstruktur solcher Seifengele zunächst überwiegend in Erscheinung tritt. Das ermöglicht die bekannte Ausbildung und Handhabung solcher Massen in Stiftform in verschließbaren Hülsen. Beim Abreiben wird die Micellstruktur zerstört und damit die starre Masse in den pastösen Zustand umgewandelt, in dem dann der Klebstoffcharakter des Stoffgemisches in den Vordergrund tritt.

Es sind zahlreiche Versuche unternommen worden, Klebestifte dieser Art durch Veränderung der formgebenden Gerüstsubstanz und/oder durch Veränderung der mit Lösungsmittel aktivierten klebstoffbildenden Komponente zu verändern. Die DE-OS 22 04 482 verwendet als formgebende Gerüstsubstanz das Reaktionsprodukt von Sorbit und Benzaldehyd. Nach der Lehre der DE-OS 26 20 721 sollen Salze von substituierten Terephthalsäureamiden als Geliermittel verwendet werden. Gemäß DE-OS 20 54 503 sollen anstelle der Alkalimetallsalze von aliphatischen Carbonsäuren freie langkettige aliphatische Säuren oder deren Ester die Gerüstsubstanz darstellen. Die DE-OS 22 19 697 will solche Klebestifte dadurch verbessern, daß anionische nichtseifige Netzmittel dem Stift einverleibt werden, insbesondere um dessen Abrieb auf der Unterlage zu verbessern. Gemäß der DE-OS 24 19 067 soll als gelbildendes Mittel ein Reaktionsprodukt aus aromatischen Diisocyanaten mit Mono- und/oder Dialkanolaminen Verwendung finden.

Trotz aller dieser Vorschläge wird bis zum heutigen Tage wenigstens in weitaus überwiegendem Umfang die älteste Form der hier betroffenen Klebestifte auf Basis von Seifengelen eingesetzt, wie sie in der eingangs zitierten DE-PS 18 11 466 beschrieben sind. Eine Lösung von PVP in einem wäßrig-organischen Lösungsmittelgemisch wird durch Einarbeitung von Alkaliseifen aliphatischer Carbonsäuren in die Form des weich abreibbaren Klebestifts umgewandelt.

In der deutschen Patentanmeldung DE 36 06 382 wird ein verbesserter Klebestift beschrieben, der zur Verbesserung der Abreibfähigkeit zusätzlich eine begrenzte Menge an Lactamen niederer Aminocarbonsäuren und/oder die entsprechenden ringgeöffneten Aminocarbonsäuren enthält.

Als weitere Klebestiftanmeldungen bzw. -patente seien genannt: DE 39 21 554, DE 37 02 871, DE 33 28 099, DE 26 13 935, DE 30 15 268 und DE 20 53 674. Aus letzterer ist bekannt, daß als klebende Komponente filmbildende, natürliche und synthetische Polymere Verwendung finden. Unter einer Vielzahl von Verbindungen wird als Beispiel für Stärkederivate Carboxymethylstärke genannt. Aus der DE 18 11 466 sind als Bestandteil der Klebestifte wasserlösliche bzw. wasserdispergierbare Klebstoffe, wie z. B. ethoxylierte und propoxylierte Stärkederivate bekannt. Werden derartige Verbindungen in handelsüblicher Form als überwiegender oder alleiniger klebender Bestandteil in Klebestiften eingesetzt, so ist ein solcher Klebestift im Prinzip brauchbar, erfüllt jedoch nicht die Forderungen der Formstabilität, der Abreibbarkeit und einer Mindestklebrigkeit, da er in seiner Konstitution meist bröckelig ist, sich schlecht auftragen läßt und keine ausreichende Klebrigkeit aufweist.

Aufgabe der Erfindung ist es, diesen Mängeln Abhilfe zu verschaffen und einen Klebestift bereitzustellen, der formstabil, geschmeidig abreibbar ist und eine ausreichende Klebekraft besitzt, obwohl er lösungsmittelfrei zu formulieren sein soll und auf Rohstoffen basieren soll, die nativer Herkunft und ökologisch unbedenklich sind. Die notwendigen Änderungen dürfen jedoch seine Herstellbarkeit zumindest nicht erschweren, sondern sollten sie möglichst noch erleichtern.

Überraschenderweise wurde gefunden, daß ein solcher Klebestift erhalten wird, wenn als klebende Komponente definiert abgebaute Stärkeether in einem gewissen Viskositätsbereich eingesetzt werden.

Die erfindungsgemäße Aufgabe wird also gelöst durch einen Klebestift, bestehend aus einer wäßrigen Zubereitung von makromolekularen Stoffen als klebender Komponente und einem Seifengel als formgebender Gerüstsubstanz sowie gewünschtenfalls weiteren Hilfsstoffen, der sich dadurch kennzeichnet, daß die klebende Komponente viskositätsreduzierte Stärkeether enthält.

Unter "viskositäsreduzierten" Stärkeethern werden Stärkeether verstanden, die nicht nur weitgehend polymeranalog verethert wurden, sondern darüber hinaus auch noch chemisch oder physikalisch so destrukturiert wurden, daß ihre Viskosität kleiner als ca. 2 000 000 mPas ist ( 30 %ige Lösung, 20 °C, Brookfield).

Nach Ullmann, Encyklopädie der technischen Chemie, 4. Auflage, Verlag Chemie, Weinheim/Bergstraße (1974) sind Stärkeether formal Produkte der Kondensation zwischen den Hydroxygruppen der Anhydroglucose-Einheiten (AGE) von Stärkemolekülen und alkoholischen Hydroxygruppen anderer Verbindungen. Nur einige wasserlösliche dieser Stärkeethertypen werden in größerem Umfang hergestellt und industriell eingesetzt. Hierzu gehören bestimmte Hydroxyalkylstärken, speziell Hydroxyethyl- und Hydroxypropylstärke sowie Carboxymethylstärke. Als besonders geeignet im Sinne der Erfindung haben sich Umsetzungsprodukte von nativen Stärken mit Ethylenoxid, Propylenoxid, Butylenoxid und/oder Glyciden erwiesen. Insbesondere Stärkederivate mit höheren Substitutionsgraden, vorzugsweise nichtionogene Stärkeether lassen sich vorteilhafterweise bei mechanischer Behandlung in wäßrigen Systemen durch den Abbau von kristallinen Strukturen und/oder durch oxidativen, säurehydrolytischen, enzymatischen und thermischen Abbau auf ein relativ niedriges Viskositätsniveau einstellen und sind deshalb in besonderem Maße geeignet. Besonders bevorzugt sind also viskositätsreduzierte nichtionische Stärkeether, insbesondere Hydroxyalkylstärke, da mit diesen am besten die gewünschten Klebestifte erhalten werden. Vorzugsweise sollte der Substitutionsgrad (DS) 0,1 bis 2,0, insbesondere 0,2 bis 1,0, betragen. Selbstverständlich können auch erfolgreich Mischveretherungsprodukte erfindungsgemäß verwendet werden. Die erfindungsgemäßen Klebestifte enthalten vorzugsweise 5 Gew.-% bis 50 Gew.-% an viskositätsreduzierten Stärkeethern. Dabei ist die Gewichtsprozentangabe auf die Gesamtmasse des Stifts bezogen.

Neben den erfindungsgemäßen viskositätsreduzierten Stärkeethern kann der Klebestift noch andere makromolekulare Stoffe (z.B. Polyurethan-Dispersionen, Polyvinylpyrrolidon und/oder Polyacrylate) als klebende Komponente enthalten. Der Anteil der klebenden Komponenten insgesamt sollte 15 bis 50 Gew.-% betragen.

Zur Herstellung der erfindungsgemäß verwendbaren Stärkederivate lassen sich im Prinzip alle nativen Stärken einsetzen. Geeignete Stärken lassen sich dem genannten Ullman, Band 22 in den Unterkapiteln 6.2 bis 6.4 zum Kapitel "Stärke" entnehmen. Neben den Getreidestärken wie Mais-, Weizen- oder Reisstärke sowie Knollen- oder Wurzelstärken wie Kartoffel- oder Tapiokastärke sind auch Leguminosenstärken wie Erbsen- oder Bohnenstärke geeignet.

Die erfindungsgemäßen Klebestifte enthalten als Seifen zur Ausbildung der Gelstruktur zweckmäßigerweise Natriumsalze von C₁₂- bis C₂₂-Fettsäuren natürlichen oder synthetischen Ursprungs. Bevorzugt sind hier C₁₄ bis C₁₈-Fettsäuren und deren Gemische. Die Natriumsalze der Fettsäuren, also die Seifen, sind in Mengen von 3 bis 20 Gew.-%, bezogen auf Klebestiftmasse, vorzugsweise von 5 bis 10 Gew.-%, vorhanden.

In den erfindungsgemäßen Klebestiften können die bei Klebestiften üblichen Hilfsstoffe in Mengen von 0 bis 25 Gew.-%, bezogen auf den Klebstift, mit eingesetzt werden. Dies sind beispielsweise Weichmacher und/oder feuchtigkeitssregulierende Stoffe - das sind organische wasserlösliche Lösungsmittel -, die üblicherweise in Klebestiften verwandt werden. Mit eingesetzt werden können weiterhin polyfunktionelle Alkohole wie Propylenglykol, Glycerin, Polyglycerine, Trimethylolpropan, Polyetherglykole sowie Sorbit und/oder niedermolekulare Stärkehydrolysate, die durch Wasserstoffreduktion in die entsprechenden Polyole umgesetzt wurden. Es kann beispielsweise ein Gemisch aus Glycerin und Polyethylenglykol mitverwendet werden. Die genannten nicht-flüchtigen organischen Lösungsmittel sollten dabei höchstens in Mengen bis 50 Gew.-%, bezogen auf den Wassergehalt der Stifte, eingesetzt werden.

Neben den hier geschilderten Hauptkomponenten können übliche Hilfsmittel mitverwendet werden, beispielswise Substanzen, die den leichten und weichen Abrieb fördern. Derartige Substanzen sind beispielsweise Aminocarbonsäuren und/oder ihre Lactame. Geeignete Aminocarbonsäuren bzw. deren Lactame sollten bis zu 12 C-Atomen, insbesondere 4 bis 8 C-Atome enthalten. Der für die praktische Verwendung bevorzugte Vertreter ist Epsilon-Caprolactam bzw. die sich daraus ableitende 7-Aminocapronsäure. Die Menge der zu verwendenden Lactame oder der entsprechenden Aminocarbonäsuren beträgt üblicherweise nicht mehr als 15 Gew.-%, beispielsweise 1 Gew.-% bis 10 Gew.-%, bezogen auf die Gesamtstiftmasse.

Als weitere Hilfsstoffe können die erfindungsgemäßen Klebestifte Pigmente, Farbstoffe, Duftstoffe, Konservierungsmittel und dergleichen enthalten. Die Mengen dieser Stoffe sind wie üblich untergeordnet. Weitere mögliche Additive sind beispielsweise Füllstoffe, optische Aufheller, Dextrine, Cellulosederivate und nicht destrukturierte Stärkederivate. Als weitere Additive können Mannane, insbesondere Galactomannane in den erfindungsgemäßen Klebestiften enthalten sein. Geeignet sind insbesondere die Galactomannane aus den Früchten des Johannisbrotbaums und aus Guarmehl. Die destrukturierten Stärkeether können auch zu einem untergeordneten Anteil durch destrukturierte Mannane ersetzt werden.

Die einzelnen Komponenten sind vorzugsweise in folgenden Mengen im Klebestift enthalten: 3 bis 10 Gew.-% Seifen, 5 bis 40 Gew.-% viskositätsreduzierter Stärkeether und 0 bis 25 Gew.-% Hilfsstoffe, wovon 0 bis 20 Gew.-% wasserlösliche bzw. dispergierbare Polymere sein können. Der Rest zu 100 % ist Wasser.

Die Verarbeitung der Mischung erfolgt in an sich bekannter Weise aus den auf Temperaturen von mindestens 50°C, vorzugsweise auf bis zu 80°C, erwärmten Mischungen aus den wäßrigen Zubereitungen viskositätsreduzierter Stärkeether, dem Seifenbestandteil und gewünschtenfalls den weiteren Hilfsstoffen. Es ist bevorzugt, diese Mischungen, die im erwähnten Temperaturbereich leicht gießbar sind, direkt in Stifthülsen oder ähnliche Gebinde abzufüllen und ohne mechanische Beeinflussung zu den gewünschten Gelen erstarren zu lassen. Die wäßrigen Zubereitungen der viskositätsreduzierten Stärkeether werden vorzugsweise dadurch hergestellt, daß man die Stärkeether mit Wasser mischt und die Überstrukturen der Stärkeether durch mechanische Einwirkung - weitestgehend irreversibel - abbaut und/oder die Stärkeether oxidiert, säurekatalytisch, enzymatisch bzw. thermisch abbaut. Dabei werden konzentrierte Systeme mit einem Stärkeethergehalt von etwa 20 Gew.-% bis 70 Gew.-% bevorzugt, da sich erwiesen hat, daß in diesen Konzentrationsbereichen die technische Handhabung am einfachsten ist. Anschließend können die wäßrigen Zubereitungen mit den übrigen Bestandteilen in beschriebener Weise zusammengebracht werden. Gewünschtenfalls können die Stärkederivatzubereitungen vor dem Vermengen mit den anderen Bestandteilen verdünnt werden, vorzugsweise auf einen Stärkeethergehalt von 20 Gew.-% bis 40 Gew.-%.

Der mechanische Abbau der Strukturen derartiger wäßriger Systeme kann in dem Fachmann bekannten mechanischen Vorrichtungen, vorzugsweise bei den genannten erhöhten Konzentrationen erfolgen. Als solche Vorrichtungen eignen sich Kneter, Extruder, Stator/Rotor-Maschinen und/oder Rührwerke. Der Grad des mechanischen Abbaus der Überstrukturen der wäßrigen Stärkederivatsysteme ist abhängig von der Konzentration, der Temperatur, der Verweilzeit und der Scherung. Der Abbaugrad der Stärkeüberstrukturen sollte vorteilhafterweise nahe am erreichbaren Grenzwert liegen. Der Abbaugrad kann durch die Bestimmung der Lösungsviskositäten ermittelt werden. Ohne Nachteile kann der Abbau der Stärkeüberstrukturen auch während der Herstellung der Klebestiftmassen in Ansatzvorrichtungen erfolgen, in denen ein ausreichender Abbaugrad der Stärkeüberstrukturen erreicht werden kann. Ein ausreichender Abbaugrad im Sinne der Erfindung kann angenommen werden, wenn eine 30 Gew.-%ige wäßrige Lösung des verwendeten Stärkeethers bei 20 °C eine Viskosität nach Brookfield von etwa 100 bis 1.000.000 mPas, vorzugsweise 2.000 bis 100.000 mPas, insbesondere 3.000 bis 30.000 mPas aufweist. Als besonders geeignet haben sich Klebestifte erwiesen, die 5 Gew.-% bis 10 Gew.-% der erfindungsgemäßen Stärkeether mit einer Viskosität von 1 000 000 bis 50 000 mPas oder 10 bis 30 Gew.-% mit einer Viskosität von 100 000 bis 2 000 mPas oder 30 bis 50 Gew.-% mit einer Viskosität von 30 000 bis 100 mPas enthalten. Außerdem können weitere Polymere als klebende Komponente zugesetzt werden, und zwar bis zu insgesamt 50 Gew.-%. Die Gew.-% beziehen sich auf das Gesamtgewicht des Klebestiftes.

Der mechanische Abbau der Stärke- bzw. Stärkeetherüberstrukturen kann durch einen chemischen Abbau der Stärkemoleküle auf das erfindungsgemäße Viskositätsniveau ergänzt oder ersetzt werden. Der partielle chemische Abbau der Stärke- bzw. Stärkeethermoleküle kann sowohl vor als auch nach dem mechanischen Abbau der Stärkeüberstrukturen durchgeführt werden. Ebenso können beide Prozesse auch voneinander unabhängig alleine ausgeführt werden. Die Viskositätsreduzierung der Stärkeetherlösung kann auch ausschließlich durch einen chemischen Abbau auf das erfindungsgemäße Viskositätsniveau erfolgen. Der Abbau der Stärkemoleküle kann nach dem Fachmann bekannten Verfahren durch oxidativen, säurehydrolytischen, enzymatischen oder thermischen Abbau erfolgen.

In "Ullmanns Encyklopädie der technischen Chemie", 4. Auflage, Verlag Chemie, Weinheim (1974) sind die üblichen Verfahren zum Abbau von Stärken näher beschrieben. Bevorzugte Oxidationsmittel für den oxidativen Abbau sind Chromsäure, Permanganat, Wasserstoffperoxid, Stickstoffdioxid, Hypochlorit, Perjodat und Persäuren wie z. B. Peressigsäure. Als Säuren für den säurehydrolytischen Abbau werden bevorzugt Salzsäure, Schwefel- oder Phosphorsäure eingesetzt, aber auch die Verwendung anderer Säuren wie z. B. Essigsäure, Oxalsäure` schweflige Säure, Perchlorsäure oder Trichloressigsäure ist möglich. Als stärkeabbauende Enzyme können alpha- und beta-Amylasen sowie die Glucoamylasen und entzweigende Enzyme eingesetzt werden.

Die erfindungsgemäßen Klebestifte zeigen hohe Klebkraft und sind neben dem flächigen Verbinden von Substraten insbesondere für die Verklebung von Papier und/oder Pappe anwendbar. Sie lassen sich darüber hinaus gewünschtenfalls auch ohne Verwendung wasserlöslicher Weichmacher (wasserlösliche organische Lösungsmittel) oder feuchtigkeitsregulierender Stoffe (ebenfalls wasserlösliche organische Lösungsmittel) herstellen.

Die erfindungsgemäßen Klebestifte zeichnen sich durch einen geschmeidigen Abrieb aus, wobei mit niedriger Kraft ein gleichmäßiger Film ohne Unebenheiten erhalten wird.

Die Druckfestigkeiten liegen bei ca. 30 - 70 N/16 mm ø.

### Beispiele

Verschiedene Stärkeether wurden in einem zweiwelligen Z-Kneter im wäßrigen System bei einer Feststoffkonzentration von 70 Gew.-% bis 75 Gew.-% bei ca. 80°C 3 Stunden lang geschert, danach auf 30 Gew.-% Feststoffgehalt mit Wasser verdünnt. Mit dem Brookfieldviskosimeter wurden die Lösungsviskositäten bei Raumtemperatur (RT) bestimmt:

**Tabelle 1**

| Viskosität verschiedener wäßriger Stärkeetherlösungen (30 Gew.-%ig) bei Raumtemperatur | | |
|---|---|---|
| Einsatzstoff | Viskosität, [mPas] | |
| | nach Scherung | vor Scherung |
| HES-K 250 | 11.700 | > 2.000.000 |
| HES-K 500 | 9.000 | > 2.000.000 |
| HES-K 750 | 5.700 | > 2.000.000 |
| HES-K 1000 | 5.200 | > 2.000.000 |
| HES-K 1250 | 2.700 | > 2.000.000 |
| HPS-K 100 | 19.000 | > 2.000.000 |
| HPS-K 250 | 12.000 | > 2.000.000 |
| HPS-K 500 | 8.000 | > 2.000.000 |
| HPS-K 750 | 3.400 | > 2.000.000 |
| HPS-K 1000 | 4.500 | > 2.000.000 |
| HPS-K 1250 | 3.600 | > 2.000.000 |
| HE/HPS-K 250/250 | 10.000 | > 2.000.000 |
| HE/HPS-K 500/500 | 11.800 | > 2.000.000 |
| HE/HPS-K 1000/1000 | 16.200 | > 2.000.000 |
| HBS-K 750 | 4.700 | > 2.000.000 |
| HBS-K 1250 | 2.700 | > 2.000.000 |
| DHPS-K 500 | 6.700 | > 2.000.000 |
| DHPS-K 1000 | 18.000 | > 2.000.000 |
| HPS-M 750 | 7.100 | > 2.000.000 |
| HPS-T 750 | 7.700 | > 2.000.000 |
| CMS-K 240/16 | 75.000 | > 2.000.000 |

**Tabelle 2**

| Vergleich der Viskosität verschiedener wäßriger Stärkeetherlösungen (10 Gew.-%ig) geschert und ungeschert bei RT | | |
|---|---|---|
| Einsatzstoff | Viskosität [mPas] | |
| | nach Scherung | vor Scherung |
| HES-K 1000 | 200 | 86.000 |
| HPS-K 1000 | 200 | 64.000 |
| HPS-M 750 | 350 | 48.000 |
| HPS-T 750 | 360 | 84.000 |
| DHPS-K 1000 | 730 | 96.000 |

Wie die Beispiele in Tabelle 1 und Tabelle 2 zeigen, liegt die Viskosität einer Stärkeether-Lösung vor der Behandlung um ein Vielfaches höher als bei einer solchen nach der Behandlung.

### Definitionen:

- HPS: : Hydroxypropylstärke
- HBS: : Hydroxybutylstärke
- DHPS: : Dihydroxypropylstärke
- K, M, T: : Basis Kartoffelstärke, Maisstärke, Tapiokastärke
- 100: : Molverhältnis: Stärke/PO = 1 : 0,100
- 750: : Molverhältnis: Stärke/PO = 1 : 0,750
- 1000: : Molverhältnis: Stärke/PO = 1 : 1,000
- HES: : Hydroxyethylstärke
- HE/HPS: : Hydroxyethyl-Hydroxypropylstärke
- CMS: : Carboxymethylstärke
- 240/16: : Molverhältnis: Stärke/MCAc = 1 : 0,240; Molverhältnis: Stärke/GCH-PGE = 100 : 0,016 (GCH-PGE = Bis-Glycerinchlorhydrin-Polyglykolether, MG = 780, MCAc = Methylcelluloseacetat).

### I. Herstellung der Stärkeetherlösungen

Beispiele zur Destrukturierung der Stärke durch mechanische Behandlung:

### Beispiel 1 Abbau mittels Z-Kneter (siehe auch Tabellen 1 und 2):

1,8 kg eines Stärkeethers HES-K 1250 wurden mit 440 ml Wasser bei einer Feststoffkonzentration von 80,4 Gew.-% im zweiwelligen Z-Kneter bei ca. 80°C 3 Stunden lang geschert. Anschließend wurde nach Abkühlen unter weiterem Kneten mit Wasser vorsichtig auf 30 Gew.-% Feststoffgehalt verdünnt. Die bei Raumtemperatur gemessene Viskosität der erhaltenen Lösung betrug 3.600 mPas (Brookfield-Viskosimeter).

### Beispiel 2 Abbau mittels Kreuzbalkenrührer:

40 kg eines Stärkeethers HPS-K 750 (Feststoffkonzentration = 41,5 Gew.-%) wurden in einem Reaktor, der mit einem Kreuzbalkenrührer und Stromstörern ausgestattet war, 5 Stunden lang bei 60-65°C gerührt.

Anschließend wurde im Reaktor mit Wasser auf einen Feststoffgehalt von 30 Gew.-% verdünnt. Die bei Raumtemperatur gemessene Viskosität der erhaltenen Lösung betrug 14.000 mPas (Brookfield-Viskosimeter).

### Beispiel 3 Abbau mittels Rotor/Stator-System:

Aus einem Vorlagegefäß, das mit 6 kg eines Stärkeethers HPS-K 750 (Feststoffkonzentration = 42 Gew.-%) befüllt war, wurde der Stärkeether kontinuierlich bei 75-80°C einer hochdrehenden Rotor/Stator-Maschine zugepumpt und danach in Kreislauffahrweise ins Vorlagegefäß zurückgefördert. Nachdem etwa 1 Stunde bei einem Volumenstrom von 120-160 kg/h und einer Temperatur von 75-80°C geschert worden war, wurde der Versuch beendet. Die bei Raumtemperatur gemessene Viskosität der Lösung betrug nach Verdünnen auf eine 30 Gew.-%ige Lösung 6.000 mPas (Brookfield-Viskosimeter).

### Beispiel 4 Abbau mittels Extruder (2-wellig):

1,5 Gewichtsteile eines Stärkeethers HES-K 1250 wurden mit 0,5 Gewichtsteilen Wasser bei einer Feststoffkonzentration von 75 Gew.-% im zweiwelligen Extruder bei ca. 80°C 3 Stunden lang geschert. Anschließend wurde nach Abkühlen unter weiterem Kneten mit Wasser vorsichtig auf 30 Gew.-% Feststoffgehalt verdünnt. Die bei Raumtemperatur gemessene Viskosität der erhaltenen Lösung betrug 4.000 mPas (Brookfield-Viskosimeter).

### Beispiel 5: Abbau durch Oxidation

17,9 kg eines Stärkeethers HPS-T750 (Feststoffkonzentration 40,7 %) wurden bei 60 °C mit 41,8 g einer 32,1 %igen Wasserstoffperoxid-Lösung versetzt. Anschließend wurde die Lösung auf 83 °C erhitzt und 2,5 h lang unter Verwendung eines Kreuzbalkenrührers gerührt, wobei die Lösung dünnflüssiger wurde. Die bei 20 °C gemessene Viskosität der erhaltenen Lösung betrug 9 000 mPas (Brookfield-Viskosimeter) bei einem Festkörpergehalt von 30 %.

### Beispiel 6: Abbau durch säurehydrolytische Einwirkung

In einem 1000-ml-Glaskolben mit Rührer wurden 432 g einer Stärkeetherlösung HPS-T750 (Feststoffkonzentration 40,7 %) mit 28 g Wasser verdünnt und mit 126 ml 2-molarer HCl auf einen pH von 1,2 angesäuert. Anschließend wurde die Lösung 40 Minuten bei 65 °C erhitzt.

Die bei Raumtemperatur gemessene Viskosität der erhaltenen Lösung betrug 5.700 mPas (Brookfield-Viskosimeter).

### Beispiel 7: Abbau durch enzymatische Einwirkung

In einem 1000-ml-Glaskolben mit Rührer wurden 508 g einer Stärkeetherlösung HPS-T750 (Feststoffkonzentration 40,7 %) mit 41 g Wasser und 121 ml 2-molarer HCl verdünnt und nach Erhitzen auf 65 °C mit 2-molarer HCl-Lösung auf einen pH von 6 eingestellt. Zu dieser Lösung wurden 6,6 mg alpha-Amylase (BAN 800 MG, KNU/g) hinzugegeben und 30 Minuten bei 65 °C gerührt. Anschließend wurde die Lösung 20 Minuten unter Rückfluß gekocht, um das Enzym zu inaktivieren. Die bei Raumtemperatur gemessene Viskosität der erhaltenen Lösung betrug 5.400 mPas (Brookfield-Viskosimeter).

### II. Beispiele Stärkeether-Stifte

- A: viskositätsreduzierte Stärkeether (erfindungsgemäß)
- B: nicht viskositätsreduzierte Stärkeether (nicht erfindungsgemäß)

Die Stärkeether enthalten freies Alkali, das im allgemeinen ausreicht, die Fettsäuren zu verseifen.

In den nachfolgenden Beispielen wird daher Natriumhydroxid nur dann angegeben, wenn es zur vollständigen Verseifung zusätzlich erforderlich ist. Die Stifte wurden, wie im Beispielteil geschildert, hergestellt.

### Beispiele Stärkeether-Stifte A

### Beispiel 1A

22,5 g HPS-K 750 mechanisch destrukturiert
4,2 g Monocarbonsäure, C16
1,3 g Monocarbonsäure, C18
1,0 g Monocarbonsäure, C14
6,5 g Sorbitlösung
10,0 g Glycerin
54,5 g Wasser
- Abrieb:: geschmeidig
- Offene Zeit:: 50 Sekunden
- Abbindezeit:: 3,5 Minuten
- Druckfestigkeit:: 45 N/16 mm ø

### Beispiel 2A

23,2 g HPS-T 750 oxidativ abgebaut
5,5 g Monocarbonsäuren C16/C18
9,5 g Sorbitlösung
7,0 g Glycerin
3,0 g 1,2-Propylenglykol
51,8 g Wasser
- Abrieb:: geschmeidig
- Offene Zeit:: 60 Sekunden
- Abbindezeit:: 3-4 Minuten
- Druckfestigkeit:: 48 N/16 mm ø

### Beispiel 3A

24,5 g HE/HPS-K 1000 mechanisch destrukturiert
6,0 g Monocarbonsäuren C16/C18
10,0 g Sorbitlösung
10,0 g Glycerin
0,2 g Natriumhydroxid
49,3 g Wasser
- Abrieb:: glatt, geschmeidig
- Offene Zeit:: 50-60 Sekunden
- Abbindezeit: : 3,5 Minuten
- Druckfestigkeit:: 46-48 N/16 mm ø

### Beispiel 4A

23,7 g HE/HPS-K 1000 mechanisch destrukturiert
5,5 g Monocarbonsäuren C16/C18
6,5 g Sorbitlösung
8,0 g Glycerin
56,3 g Wasser
- Abrieb:: geschmeidig
- Offene Zeit:: 50-60 Sekunden
- Abbindezeit:: 3 Minuten
- Druckfestigkeit:: 43-44 N/16 mm ø

### Beispiel 5A

24,3 g HPS-M 750 mechanisch destrukturiert
5,5 g Monocarbonsäuren C16/C18
2,0 g Natriumhydroxid
10,0 g Sorbitlösung
9,0 g Glycerin
49,2 g Wasser
- Abrieb:: geschmeidig
- Offene Zeit:: 50 Sekunden
- Abbindezeit:: 3-4 Minuten
- Druckfestigkeit:: 48-50 N/16 mm ø

### Beispiel 6A

24,3 g HBS-K 750 mechanisch destrukturiert
5,5 g Monocarbonsäuren C16/C18
8,0 g Sorbitlösung
9,0 g Glycerin
4,0 g 1,2-Propylenglykol
1,0 g Natriumhydroxid
48,2 g Wasser
- Abrieb:: geschmeidig
- Offene Zeit:: 45-60 Sekunden
- Abbindezeit:: 2,5-3 Minuten
- Druckfestigkeit:: 45 N/16 mm ø

### Beispiel 7A

24,5 g DHPS-K 1000 mechanisch destrukturiert
5,5 g Monocarbonsäuren C16/C18
9,0 g Sorbitlösung
8,0 g Glycerin
1,0 g Natriumhydroxid
52,0 g Wasser
- Abrieb:: geschmeidig
- Offene Zeit:: 50-60 Sekunden
- Abbindezeit:: 2,5-3 Minuten
- Druckfestigkeit:: 44 N/16 mm ø

### Beispiel 8A

5,5 g Monocarbonsäure C16/C18
20,0 g HPS-M750 mechanisch destrukturiert
4,3 g PVP K80
2,0 g NaOH
10,0 g Sorbitlösung
8,0 g Glycerin
2,0 g Caprolactam
48,2 g H₂O
- Abrieb:: geschmeidig
- Offene Zeit:: 50-60 Sekunden
- Abbindezeit:: 2,5-3 Minuten
- Druckfestigkeit:: 50 N/16 mm ø

### Beispiel 9A

5,5 g Monocarbonsäure C16/C18
15,0 g HPS-M750 mechanisch destrukturiert
7,0 g HPS-T750 säurehydrolytisch abgebaut
3,3 g PVP K80
10,0 g Sorbitlösung
8,0 g Glycerin
1,0 g Caprolactam
48,2 g H₂O
- Abrieb:: geschmeidig
- Offene Zeit:: 50-60 Sekunden
- Abbindezeit:: 2-3 Minuten
- Druckfestigkeit:: 43 N/16 mm ø

### Beispiel 10A

5,5 g Monocarbonsäure C16/C18
15,0 g HPS-T750 oxidativ abgebaut
7,0 g HPS T750 enzymatisch abgebaut
3,0 g PVP K90
10,0 g Sorbitlösung
7,0 g Glycerin
3,0 g Caprolactam
47,5 g H₂O
- Abrieb:: geschmeidig
- Offene Zeit:: 40-50 Sekungen
- Abbindezeit:: 1,5-2,5 Minuten
- Druckfestigkeit:: 41 N/16 mm ø

PVP K80 und PVP K90 sind Polyvinylpyrrolidone der Firma BASF.

Bei der Sorbitlösung handelt es sich um eine 70 %ige wäßrige Lösung.

### Beispiele Stärkeether-Stifte B

### Beispiel 1B

21,5 g HPS-K 750
6,6 g Monocarbonsäuren C16/C18
8,0 g Sorbitlösung
7,0 g Glycerin
5,0 g 1,2-Propylenglykol
51,9 g Wasser

### Beispiel 2B

21,5 g HPS-T 750
6,5 g Monocarbonsäuren C16/C18
8,0 g Sorbitlösung
7,0 g Glycerin
5,0 g 1,2-Propylenglykol
51,9 g Wasser

### Beispiel 3B

23,8 g HPS-K 750
6,6 g Monocarbonsäuren C16/C18
7,5 g Sorbitlösung
6,0 g Glycerin
6,0 g 1,2-Propylenglykol
1,5 g Polyethylenglykol
48,6 g Wasser
In allen drei Vergleichsbeispielen mit Stärkeether mit einer Viskosität von mindestens 2 000 000 mPas wurden Klebestifte erhalten, die sich zum praktischen Gebrauch nicht eignen:
- Der Abrieb war schmierend und fadenziehend.
- Die Konstitution war bröckelig, so daß ein so ungleichmäßiger Klebstoff-Film erhalten wurde, daß die Unebenheiten nach den Verklebungen von Papier noch sehen waren.
- Die Klebrigkeit war so gering, daß keine feste Verklebung von Papier erhalten wurde.

Außerdem war es schwierig, Klebestifte herzustellen:
- Die Füllung war ungleichmäßig und enthielt Luftblasen.
- Die Verankerung im Sockel des Stiftes war unzureichend.
- Die Klebemasse zog beim Abfüllen Fäden.

### Prüfverfahren für die Qualitätskontrolle von Klebestiffen

### Druckfestigkeit

Unter dem Begriff Druckfestigkeit ist die beim Zusammenbrechen der Stiftform unter Druckbelastung parallel zur Längsachse gemessene Höchstlast zu verstehen.

Zur Messung der Druckfestigkeit dient das Prüfgerät Modell 464L, Meßkopf 709, der Fa. Erichsen, Simonshöfchen 31, 56 Wuppertal 11.

Der unmittelbar oberhalb des Kolbens abgeschnittene Klebstoff mit einer Mindestlänge von 30 mm wird zwischen zwei Haltestücke eingesteckt; hierbei handelt es sich um Scheiben aus Hart-PVC, deren Dicke ca. 10 mm beträgt und die eine, den jeweiligen Stiftdurchmessern angepaßte kreisrunde Vertiefung von 3 mm aufweisen. Der mit den Haltestücken versehene Stift wird zentrisch auf den Prüftisch des Druckfestigkeitstesters gestellt. Die Höhe des Kraftmeßinstrumentes über dem Prüftisch wird der Höhe des Prüfteils angepaßt. Dann fährt man den Meßkopf mit einer Vorschubgeschwindigkeit von ca. 70 mm pro Minute gegen den zu prüfenden Stift. Nach Erreichen der größten Druckkraft wird der Wert von der digitalen Anzeige abgelesen.

### Abbindezeit

Um zu prüfen, ob die Klebeeigenschaften der Stifte für den Verwendungszweck ausreichen, werden unter bestimmten Verarbeitungsbedingungen von Hand Probeklebungen durchgeführt und beurteilt. Hierbei wird wie folgt verfahren:

Ein Vorrat an einseitig gestrichenem, weißem Chrompapier (Flächengewicht ca. 100 g/qm) und zu prüfende Klebestifte werden mindestens 24 Stunden bei 20°C und 65 % rel. Luftfeuchtigkeit klimatisiert. Das Prüfpapier wird in 5 cm breite und ca. 30 cm lange Streifen geschnitten. Über die ungestrichene Seite eines solchen Papierstreifens wird ein Klebestift, unter möglichst gleichmäßigem Druck, in Längsrichtung zweimal abgerieben, wobei ein gleichmäßiger Auftrag entstehen soll. Unmittelbar danach wird auf diesen Streifen ein zweiter, nicht mit Klebstoff versehener Papierstreifen mit der ungestrichenen Seite nach innen aufgelegt und mit der Hand angerieben. Sodann wird versucht, die Papierstreifen langsam voneinander abzuschälen. Der Zeitpunkt, zu dem eine Trennung in der Klebzone nur noch unter Papierausriß auf voller Breite möglich ist, kennzeichnet die Abbindezeit.

### Offene Zeit

Die Offene Zeit beschreibt den Zeitraum nach dem Klebstoffauftrag, innerhalb dessen ein Zusammenfügen der zu klebenden Materialien erfolgen muß, um nach der Abbindung noch einen vollständigen Papierausriß im Trennversuch zu erhalten. Die Methode entspricht der Prüfung der Abbindezeit, jedoch werden die Papierstreifen nach dem Klebstoffauftrag erst nach definierten Zeiten zusammengefügt. Beginnend mit 15 Sekunden kann die Abstufung beispielsweise jeweils weitere 15 Sekunden betragen. Bei langsam abbindenden Klebstoffen mit einer voraussehbaren längeren Offenen Zeit wählt man entsprechend größere Abstände.

### Abrieb

Die Beschreibung des Abriebs ist eine subjektive Beurteilung durch mindestens zwei Testpersonen. Dabei werden die Anwendungseigenschaften wie folgt charakterisiert und eingestuft: glatt, geschmeidig, stumpf, bröckelnd, schmierend, hart, weich und fadenziehend.

## Patentansprüche

1. Klebestift, bestehend aus einer wäßrigen Zubereitung von makromolekularen Stoffen als klebende Komponente und einem Seifengel als formgebender Gerüstsubstanz sowie gewünschtenfalls weiteren Hilfsstoffen, dadurch gekennzeichnet, daß in der klebenden Komponente Stärkeether mit einer Viskosität kleiner als 2 000 000 mPa·s enthalten sind.

2. Klebestift nach Anspruch 1, dadurch gekennzeichnet, daß die Stärkeether nicht ionisch sind und insbesondere Umsetzungsprodukte von nativen Stärken mit Ethylenoxid, Propylenoxid, Butylenoxid und/oder Glycid sind.

3. Klebestift nach mindestens einem der vorstehenden Ansprüche, dadurch gekennzeichnet, daß der Substitutionsgrad (DS) der Stärkeether 0,1 bis 2,0, vorzugsweise 0,2 bis 1,0 beträgt.

4. Klebestift nach den Ansprüchen 1, 2 oder 3, dadurch gekennzeichnet, daß die Reduzierung der Viskosität durch physikalische, insbesondere mechanische, sowie chemische, wie thermische, säurehydrolytische, enzymatische oder insbesondere oxidative Destrukturierung, oder durch Kombination obengenannter Einwirkungen erfolgt.

5. Klebestift nach mindestens einem der Ansprüche 1 bis 4, dadurch gekennzeichnet, daß die Stärkeether nach der Destrukturierung eine Viskosität von 100 bis 1 000 000 mPas, vorzugsweise von 2 000 bis 100 000 mPas, besonders bevorzugt von 3 000 bis 30 000 mPas aufweisen, jeweils in Lösung mit 30 % Festkörpergehalt gemessen (Brookfield, 20 °C).

6. Klebestift nach mindestens einem der Ansprüche 1 bis 5, dadurch gekennzeichnet, daß er 5 bis 10 Gew.-% an Stärkeether mit einer Viskosität von 1 000 000 bis 50 000 mPas oder 10 bis 30 Gew.-% an Stärkeether mit einer Viskosität von 100 000 bis 2 000 mPas oder 30 bis 50 Gew.-% an Stärkeether mit einer Viskosität von 30 000 bis 100 mPas enthält, wobei sich die Gew.-% auf den Klebestift insgesamt beziehen und die Viskosität einer 30 Gew.-%igen wäßrigen Lösung bei 20 °C gemeint ist.

7. Klebestift nach mindestens einem der vorstehenden Ansprüche, dadurch gekennzeichnet, daß der Gehalt an viskositätsreduzierten Stärkeethern mindestens 5 %, bevorzugt > 10 %, besonders bevorzugt > 15 % und maximal 50 Gew.-%, bezogen auf die Gesamtmasse des Stiftes, beträgt.

8. Klebestift nach mindestens einem der vorstehenden Ansprüche, dadurch gekennzeichnet, daß als die Gelstruktur bildende Seife Natriumsalze von C₁₂- bis C₂₂-Fettsäuren, insbesondere C₁₄- bis C₁₈-Fettsäuren natürlichen oder synthetischen Ursprungs enthalten sind.

9. Klebestift nach mindestens einem der vorstehenden Ansprüche, dadurch gekennzeichnet, daß die Natriumsalze der Fettsäuren in Mengen von 3 bis 20, vorzugsweise von 5 bis 10 Gew.-% bezogen auf die Gesamtmasse des Stifts enthalten sind.

10. Klebestift nach mindestens einem der vorstehenden Ansprüche, dadurch gekennzeichnet, daß als weitere Hilfsstoffe Weichmacher, Pigmente, Farbstoffe, Duftstoffe, Konservierungsmittel und/oder feuchtigkeitsregulierende Stoffe sowie gewünschtenfalls weitere wasserlösliche und/oder wasserdispergierbare Polymere enthalten sind.

11. Klebestift nach mindestens einem der vorstehenden Ansprüche, dadurch gekennzeichnet, daß
3 bis 10 Gew.-% Natrium-Seifen
5 bis 40 Gew.-% viskositätsreduzierte Stärkeether
0 bis 25 Gew.-% Hilfsstoffe
0 bis 20 Gew.-% an wasserlöslichen bzw. dispergierbaren Polymeren
Rest zu 100 Gew.-% Wasser
enthalten sind.

12. Verfahren zur Herstellung von Klebestiften gemäß den vorstehenden Ansprüchen, dadurch gekennzeichnet, daß zunächst ein wäßriges, vorzugsweise hochkonzentriertes System geeigneter Stärkederivate unter Abbau der Überstrukturen durch mechanische Einwirkung und/oder durch einen chemischen Abbau hergestellt wird und dann diese Zubereitung - gewünschtenfalls mit Wasser verdünnt - mit den das Seifengel bildenden Bestandteilen sowie gegebenenfalls mit den weiteren Hilfsstoffen innig vermischt wird, auf Temperaturen von mindestens 50 °C erwärmt wird bis eine gleichmäßige Mischung entstanden ist und man diese ohne mechanische Beeinflußung unter Gelbildung abkühlen läßt.

13. Verwendung der Klebestifte gemäß vorstehenden Ansprüchen 1 bis 12 zum flächigen Verbinden von Substraten, insbesondere Papier und/oder Pappe.

14. Verwendung von viskositätsreduzierten Stärkeethern nach mindestens einem der Ansprüche 1 bis 5 als klebende Komponente in Klebestiften.

## Claims

1. An adhesive stick consisting of a water-based preparation of macromolecular substances as the adhesive component and a soap gel as the shaping gel-forming component and, optionally, other auxiliaries, characterized in that viscosity-reduced starch derivatives are present in the adhesive component.

2. An adhesive stick as claimed in claim 1, characterized in that the starch ethers are nonionic and, in particular, are reaction products of native starches with ethylene oxide, propylene oxide, butylene oxide and/or glycidol.

3. An adhesive stick as claimed in at least one of the preceding claims, characterized in that the degree of substitution (DS) of the starch ethers is from 0.1 to 2.0 and preferably from 0.2 to 1.0.

4. An adhesive stick as claimed in claim 1, 2 or 3, characterized in that the viscosity is reduced by physical, more particularly mechanical, destructuring and also by chemical destructuring, such as thermal, acid-hydrolytic, enzymatic or, more particularly, oxidative destructuring or by a combination of these methods.

5. An adhesive stick as claimed in any of claims 1 to 4, characterized in that, after destructuring, the starch ethers have a viscosity of 100 to 1,000,000 mPas, preferably 2,000 to 100,000 mPas and, more preferably, 3,000 to 30,000 mPas, as measured in a solution having a solids content of 30% (Brookfield; 20°C).

6. An adhesive stick as claimed in at least one of claims 1 to 5, characterized in that it contains 5 to 10% by weight starch ethers having a viscosity of 1,000,000 to 50,000 mPas or 10 to 30% by weight starch ethers having a viscosity of 100,000 to 2,000 mPas or 30 to 50% by weight starch ethers having a viscosity of 30,000 to 100 mPas, the percentages by weight being based on the adhesive stick as a whole and the viscosity being that of a 30% by weight aqueous solution at 20°C.

7. An adhesive stick as claimed in at least one of the preceding claims, characterized in that the content of viscosity-reduced starch ethers is at least 5%, preferably >10% and, more preferably, >15% and at most 50% by weight, based on the total weight of the stick.

8. An adhesive stick as claimed in at least one of the preceding claims, characterized in that sodium salts of C₁₂₋₂₂ fatty acids and, more particularly, C₁₄₋₁₈ fatty acids of natural or synthetic origin are present as the soap forming the gel structure.

9. An adhesive stick as claimed in at least one of the preceding claims, characterized in that the sodium salts of the fatty acids are present in quantities of 3 to 20% by weight and preferably 5 to 10% by weight, based on the total weight of the stick.

10. An adhesive stick as claimed in at least one of the preceding claims, characterized in that plasticizers, pigments, dyes, fragrances, preservatives and/or moisture regulators and, optionally, other water-soluble and/or water-dispersible polymers are present as further auxiliaries.

11. An adhesive stick as claimed in at least one of the preceding claims, characterized in that it contains
3 to 10% by weight sodium soaps,
5 to 40% by weight viscosity-reduced starch ethers,
0 to 25% by weight auxiliaries,
0 to 20% by weight water-soluble or dispersible polymers
balance to 100% by weight water.

12. A process for the production of the adhesive sticks claimed in the preceding claims, characterized in that an aqueous, preferably highly concentrated system of suitable starch derivatives is initially prepared with degradation of the superstructures by mechanical action and/or by chemical degradation and the resulting preparation, optionally diluted with water, is then thoroughly mixed with the components forming the soap gel and optionally with the other auxiliaries, heated to temperatures of at least 50°C until a uniform mixture is obtained and the mixture thus obtained is left to cool in the absence of mechanical action to form a gel.

13. The use of the adhesive sticks claimed in claims 1 to 12 for the surface-to-surface bonding of substrates, more particularly paper and/or cardboard.

14. The use of viscosity-reduced starch ethers according to at least one of claims 1 to 5 as the adhesive component in adhesive sticks.

## Revendications

1. Bâton de colle constitué d'une préparation aqueuse de substances macromoléculaires en tant que composant collant et d'un gel de savon en tant que substance de squelette qui donne la forme, ainsi que si désiré d'autres substances auxiliaires, caractérisé en ce que dans les composants adhésifs y sont contenus, des éthers d'amidon ayant une viscosité plus petite que 2.000.000 de mPa.s.

2. Bâton de colle selon la revendication 1, caractérisé en ce que les éthers d'amidon sont non ioniques et en particulier sont des produits de réaction des amidons natifs avec de l'oxyde d'éthylène, de l'oxyde de propylène, de l'oxyde de butylène et/ou du glycide.

3. Bâton de colle selon au moins une des revendications précédentes, caractérisé en ce que le degré de substitution (DS) de l'éther d'amidon s'élève de 0,1 à 2,0, de préférence de 0,2 à 1,0.

4. Bâton de colle selon les revendications 1, 2 ou 3, caractérisé en ce que la réduction de la viscosité est réalisée par destructuration physique, en particulier mécanique, ainsi que chimique comme une destructuration thermique, hydrolytique en milieu acide, enzymatique ou en particulier oxydative ou par combinaison des actions mentionnées ci-dessus.

5. Bâton de colle selon au moins une des revendications 1 à 4, caractérisé en ce que les éthers d'amidon après destructuration possèdent une viscosité de 100 à 1.000.000 de mPa.s, de préférence de 2.000 à 100.000 mPa.s et de manière particulièrement préférée de 3.000 à 30.000 mPa.s, respectivement mesurée en solution avec une teneur de 30 % en matières solides.

6. Bâton de colle selon au moins une des revendications 1 à 5, caractérisé en ce qu'il renferme de 5 à 10 % en poids d'éther d'amidon ayant une viscosité de 1.000.000 à 50.000 mPa.s ou de 10 à 30 % en poids d'éther d'amidon ayant une viscosité de 100.000 à 2.000 mPa.s ou de 30 à 50 % en poids d'éther d'amidon ayant une viscosité de 30.000 à 100 mPa.s, les % en poids se rapportant globalement au bâton de colle et la viscosité étant considérée pour une solution à 30 % en poids dans l'eau et à 20°C.

7. Bâton de colle selon au moins une des revendications précédentes, caractérisé en ce que la teneur en éther d'amidon dont la viscosité est réduite s'élève au moins à 5 %, de préférence à >10 % et d'une manière particulièrement préférée à >15 % et au maximum à 50 % en poids, rapportée à la masse totale du bâton.

8. Bâton de colle selon au moins l'une des revendications précédentes, caractérisé en ce que comme savon qui forme la structure de gel on y inclut les sels de sodium d'acides gras en C₁₂ à C₂₂, en particulier d'acides gras en C₁₄ à C₁₈, d'origine naturelle ou synthétique.

9. Bâton de colle selon au moins une des revendications précédentes, caractérisé en ce que les sels de sodium des acides gras y sont inclus en quantités de 3 à 20, de préférence de 5 à 10 % en poids, rapportées à la masse totale du bâton.

10. Bâton de colle selon au moins une des revendications précédentes, caractérisé en ce que comme autres substances auxiliaires des plastifiants, des pigments, des colorants, des parfums, des agents de conservation et/ou des substances qui contrôlent l'humidité ainsi que si désiré d'autres polymères solubles dans l'eau et/ou dispersibles dans l'eau y sont contenus.

11. Bâton de colle selon au moins une des revendications précédentes, caractérisé en ce que
- 3 à 10 % en poids d'un savon de sodium,
- 5 à 40 % en poids d'un éther d'amidon dont la viscosité a été réduite,
- 0 à 25 % en poids de substances auxiliaires,
- 0 à 20 % en poids de polymères solubles dans l'eau et/ou dispersibles,
- le reste pour 100 % en poids d'eau y sont contenus.

12. Procédé d'obtention de bâtons de colle selon les revendications précédentes, caractérisé en ce qu'en premier lieu on produit un système aqueux, de préférence hautement concentré de dérivés appropriés d'amidon par dégradation des superstructures par action mécanique et/ou par dégradation chimique, et ensuite on mélange intimement cette préparation, si désiré tout en diluant à l'eau, avec les constituants qui forment le gel de savon, ainsi qu'éventuellement avec les autres substances auxiliaires, qu'on chauffe à des températures d'au moins 50°C jusqu'à ce qu'un mélange homogène soit formé et qu'on laisse refroidir celui-ci sans exercer d'influence mécanique, avec formation d'un gel.

13. Utilisation des bâtons de colle conformément aux revendications 1 à 12 pour la liaison superficielle de substrats, en particulier des papiers et/ou des cartons.

14. Utilisation des éthers d'amidon dont la viscosité a été réduite selon au moins une des revendications 1 à 5, en tant que composants adhésifs dans des bâtons de colle.
